# EUROPEAN PATENT SPECIFICATION

(11) **EP 3 812 404 B1**
(45) Date of publication and mention of the grant of the patent: **09.07.2025**
(21) Application number: 19204926.0
(22) Date of filing: 23.10.2019
(51) Int. Cl.: C08F 4/659, C08L 23/14, C08F 210/06, C08L 23/12

(54) **HETEROPHASIC POLYPROPYLENE COMPOSITION HAVING IMPROVED MECHANICAL PROPERTIES**
HETEROPHASISCHE POLYPROPYLENZUSAMMENSETZUNG MIT VERBESSERTEN MECHANISCHEN EIGENSCHAFTEN
COMPOSITION DE POLYPROPYLÈNE HÉTÉROPHASIQUE PRÉSENTANT DES PROPRIÉTÉS MÉCANIQUES AMÉLIORÉES

(43) Date of publication of application: 28.04.2021
(73) Proprietor: Borealis AG, 1020 Vienna (AT)
(72) Inventor: WANG, Jingbo, 4021 Linz (AT); GAHLEITNER, Markus, 4021 Linz (AT); BERNREITNER, Klaus, 4021 Linz (AT); LESKINEN, Pauli, 06101 Porvoo (FI)
(74) Representative: Kador & Partner Part mbB

(56) References cited:
- EP-A1- 2 397 517
- EP-A1- 3 456 776
- WO-A1-2019/002294
- WO-A1-2019/134951

## Description

The present application relates to the heterophasic polypropylene composition comprising a propylene homo- or copolymer forming a crystalline matrix and an amorphous propylene ethylene elastomer forming a soluble fraction dispersed in said matrix. The heterophasic polypropylene composition has good mechanical properties while having low amounts of fractions soluble in hexane according FDA-method.

### Background Information

Heterophasic propylene copolymers are widely used in the packaging industry, due to their excellent combination of stiffness and impact behaviour. One can find the application of heterophasic propylene copolymers in many aspects of daily life. Still, there is the desire within the polymer and packaging industry to improve the available heterophasic polypropylene compositions in view of mechanical properties and especially the amount of extractable fractions. Having materials at hand, which have a low amount of polymer soluble in hexane is specifically required in the food packaging industry to fulfil the requirements of FDA and analogous national or supranational regulations. Hence, the hexane-soluble fraction according to the FDA method (C6_{FDA}) is an important property for such applications.

The majority of heterophasic propylene copolymers are produced with Ziegler-Natta catalysts, which are known to produce polymers with a relative high amount of oligomers due to the "multi-active" nature of the catalyst itself. It is a known fact that the amount of oligomers and/or extractable fractions increase in polymer having higher melt flow rates. At the same time, polymers with good flowability are of special interest for injection moulding applications, as they enable production of thin-walled articles, especially when having extended flow lengths.

It is further known, that above mentioned oligomers are easily extractible, hence increasing the amounts of polymers extractable in xylene or hexane.

On the other hand, the amorphous rubbery phase, forming a dispersed phase within the heterophasic propylene copolymers, is essential for providing impact properties, but can - due to its extractability in solvents - negatively impact the amount of soluble fractions.

### Description of the prior art:

EP 2397517 B1 claims propylene polymer compositions having a superior balance between hexane extractables and impact resistance. Claim 1 defines heterophasic polypropylene copolymers having an MFR₂ of 15 - 200 g/10 min, comprising a propylene homo- or copolymer matrix (A) with an MFR₂ of 80 - 500 g/10 min, and an ethylene or C4 -C10 -alpha-olefin propylene rubber phase (B) dispersed within the matrix, wherein the heterophasic polypropylene resin has an XCS fraction having an intrinsic viscosity of 2.85 to 4.00 dl/g, being composed of propylene monomer units in an amount of 70 - 90 wt%. The example is produced with a Ziegler Natta catalyst system and has 2.0 wt.-% of hexane extractables.

EP 2666817 B1 covers soft heterophasic polyolefin compositions having relatively low hexane extractables in view of the targeted softness. The described polymers have around 20 wt.-% of hexane extractables (C6_{FDA}).

EP 2072546 B1 claims high-flow, high-impact SSC-based heterophasic PP with C2-rich EPR phase. No value for C6_{FDA} is given. The amorphous phase is very ethylene-rich, the C2(XCS) of the sole example being 74.9 mol-% i.e. 66.5 wt.-%.

EP 2611862 B1 (priority 30.08.2010) is for SSC-based high-flow rTPO with enhanced mechanical properties. The materials have higher amounts of the amorphous fraction and higher comonomer content in the amorphous fraction. The amount of hexane solubles (C6_{FDA}) is not disclosed, but can be expected to be rather high in view of the high XCS content.

WO/2019/134951A1 covers SSC-based impacted copolymers with excellent mechanical and optical properties. Claim 1 defines a heterophasic propylene polymer (HECO) comprising (a) 65 to 90 wt.% of a matrix component (M) selected from a propylene homo- or random copolymer (PP); and (b) 10 to 35 wt.% of an ethylene-propylene rubber (EPR), dispersed in the propylene homo- or random copolymer (PP), whereby the xylene cold soluble fraction (XCS) of the heterophasic propylene polymer (HECO) has an ethylene content of 12 to 20 wt.%; an intrinsic viscosity (IV), determined according to ISO 1628-1:2009, of at least 1.6 dl/g; and the xylene cold insoluble fraction (XCI) of the heterophasic propylene polymer (HECO) has 2,1-erythro regiodefects in an amount of at least 0.4 mol%.

The materials have lower flexural modulus and higher amounts of amorphous fraction.

WO 2019/121599 A1 discloses a random heterophasic propylene copolymer with low MFR and rather low flexural modulus. The polymers disclosed have a higher amount of comonomer in the crystalline fraction as well as lower intrinsic viscosity of the soluble fraction. The polymers disclosed are not stiff enough to provide stable injection moulded articles.

### Object of the invention

Being faced with the drawbacks of the prior art and the requirements of the industry, it is the object of the invention to provide a heterophasic propylene copolymer with well balanced stiffness and impact strength, which shows both good processability in the sense of a high Melt Flow Rate (MFR₂) as well as low amounts of the hexane extractible fraction, especially when tested according to FDA-requirements.

The above mentioned problem has been surprisingly solved by providing a heterophasic polypropylene composition comprising
a) 78.0 to 92.0 wt.-% of a crystalline matrix being a propylene homo- or copolymer, said crystalline matrix corresponding to the crystalline fraction (CF) determined according to CRYSTEX QC method, ISO 6427-B and containing 0.0 to 2.0 wt.-% comonomer and
b) 8.0 to 22.0 wt.-% of an amorphous propylene-ethylene elastomer, optionally comprising of C4-C12 alpha -olefin(s) as further comonomers, dispersed in said crystalline matrix (a), wherein a) and b) add up to 100 wt.-%, and

wherein said amorphous propylene ethylene elastomer (b) corresponds to the soluble fraction (SF) determined according to CRYSTEX QC method, ISO 6427-B and contains 15.0 to 30.0 wt.-% of comonomer,
wherein the heterophasic polypropylene composition is characterised by
a Melt flow rate MFR230/2.16 determined according to ISO1133 of 30 to 120 g/10 min a hexane-soluble fraction according to FDA method, C6FDA federal registration, title 21, Chapter 1, part 177, section 1520, Annex B, of 0.8 to 2.8 wt.-%,
a Flexural Modulus according to ISO178 of 800 to 1250 MPa; and
wherein the heterophasic polypropylene composition is produced in the presence of a metallocene catalyst.

In a special embodiment, the present invention encompasses articles comprising said heterophasic polypropylene composition.

In a similar preferred embodiment, the present invention encompasses also the use of the heterophasic polypropylene composition for producing articles, especially injection moulded and/or thin walled articles as well as articles foreseen for packaging purposes. In a further embodiment, the invention covers a process for the production of the heterophasic polypropylene composition.

### Detailed description:

### Heterophasic polypropylene composition

The heterophasic polypropylene composition of the present invention comprises 78.0 to 92.0 wt.-%, preferably 79.0 - 91.0 wt.-%, more preferably 80.0 to 90.0 wt.-% of a propylene homo- or copolymer, forming the crystalline matrix (a), which corresponds to the crystalline fraction CF determined by CRYSTEX QC method ISO6427-B.

Accordingly, the heterophasic polypropylene composition comprises an amorphous propylene ethylene elastomer dispersed in said crystalline matrix in the range of 8.0 to 22.0 wt.-%, preferably in the range of 9.0 to 21.0 wt.-%, more preferably in the range of 10.0 to 20.0 wt.-%. Said amorphous elastomer corresponds to the soluble fraction (SF) determined by CRYSTEX QC method ISO6427-B.

The heterophasic polypropylene composition contains comonomers, preferably alpha-olefins selected from ethylene an C4 to C8 alpha olefins, preferably from ethylene, 1-butene or 1-hexene.

In a preferred embodiment, the heterophasic polypropylene composition comprises ethylene and 1-butene as comonomer.

In an especially preferred embodiment, the heterophasic polypropylene composition comprises, only ethylene as the sole comonomer.

The comonomer content of the inventive polymer, C2 (total), may be in the range of 1.5 to 6.5 wt.-%, preferably in the range of 1.7 to 6.0 wt.-%, more preferably in the range of 1.8 to 5.5 wt.-%.

The amount of the crystalline fraction (CF) of the heterophasic polypropylene composition is determined via determined by CRYSTEX QC method ISO6427-B and may be in the range of 78.0 to 92.0 wt.-%, preferably in the range of 79.0 to 91.0 wt.-%, more preferably in the range of 80.0 to 90.0 wt.-%.

The crystalline fraction may comprise comonomer as lined out above. The comonomer content of the crystalline fraction, C2(CF), is in the range of 0.0 to 2.0 wt.-%, preferably in the range of 0.5 to 1.8 wt.-%, more preferably in the range of 0.7 to 1.6 wt.-%.

The soluble fraction (SF) of the inventive polymer is also determined via CRYSTEX QC method ISO6427-B and may be in the range of 8.0 to 22.0 wt.-%, preferably in the range of 9.0 to 21.0 wt.-%, more preferably in the range of 10.0 to 20.0 wt.-%.

The soluble fraction comprises comonomer as lined out above. The comonomer content of said soluble fraction (C2(SF)) is in the range of 15.0 to 30.0 wt.-%, preferably in the range of more than 16.5 to 28.0 wt.-%, more preferably in the range of 17.5 to 26.0 wt.-%.

The intrinsic viscosity if the soluble fraction, IV(SF), may be in the range of 1.8 to 3.5 dl/g, preferably in the range of 2.0 to 3.2 dl/g, more preferably in the range of 2.1 to 3.1 dl/g.

The heterophasic polypropylene composition of the present invention is characterised by a specific amount of polymer soluble in hexane, when determined according to FDA-method, (C6_{FDA}; federal registration, title 21, Chapter 1, part 177, section 1520, Annex B). C6_{FDA} of the inventive polymer is in the range of 0.8 to 2.8 wt.-%, preferably in the range of 1.0 to 2.3 wt.-%, more preferably in the range of 1.1 to 2.0 wt.-%

The heterophasic polypropylene composition of the present invention has a specific ratio of the amount of soluble fraction (SF) to the amount of polymer soluble in hexane, when determined according to FDA-method.

A high(er) amount of the soluble fraction is beneficial for impact behaviour, as it reflects the amorphous propylene ethylene elastomer. Still at the same time, the amount of fractions soluble in hexane in view of FDA requirements should be as low as possible. The present invention hence provides a heterophasic polypropylene composition, which has an optimized ratio of said to aspects of soluble fractions, namely the ratio of SF/C6_{FDA}.

The MFR230/2.16 of the heterophasic polypropylene composition is in the range of 30 to 120 g/10 min, preferably in the range of 35 to 110 g/10 min, more preferably in the range of 38 to 100 g/10 min.

The heterophasic polypropylene composition may have a fraction soluble in cold xylene (XCS) in the range of 8.0 to 22.0 wt.-%, preferably in the range of 9.0 to 21.0 wt.-%, more preferably in the range of 10.0 to 20.0 wt.-%.

The comonomer content of said fraction soluble in cold xylene (XCS) of the heterophasic polypropylene composition may be in the range of 15.0 to 30.0 wt.-%, preferably in the range of more than 16.5 to 28.0 wt.-%, more preferably in the range of 17.5 to 26.0 wt.-%. The intrinsic viscosity IV(XCS) of said fraction soluble in cold xylene (XCS) of the heterophasic polypropylene composition may be in the range of 1.8 to 3.5 dl/g, preferably in the range of 2.0 to 3.2 dl/g, more preferably in the range of 2.1 to 3.1 dl/g.

The melting temperature, Tm(DSC), of the inventive polymer may be in the range of 145 to 162 °C, preferably in the range of 150 to 160 °C, more preferably in the range of 152 to 158 °C.

The crystallisation temperature (DSC) of the inventive polymer may be in the range of 103 to 123 °C, preferably in the range of 108 to 120°C, more preferably in the range of 110 to 118 °C.

### a) Propylene homo- or copolymer forming the crystalline matrix (a)

The crystalline matrix of the heterophasic polypropylene composition is a propylene homo- or copolymer, like a propylene random copolymer. It may contain alpha-olefins selected from ethylene an C4 to C8 alpha olefins, preferably from ethylene or 1-butene.

In a preferred embodiment the crystalline matrix comprises ethylene as comonomer.

In an equally preferred embodiment, the crystalline matrix is a propylene homopolymer.

The crystalline matrix forms 78 to 92 wt.-%, preferably in the range of 80 to 92 wt.-%, more preferably in the range of 81 to 92 wt.-% of the heterophasic polypropylene composition.

The crystalline matrix may accordingly comprise comonomer, as out lined above, in an amount of 0.0 to 2.0 wt.-%, preferably in an amount of 0.3 to 1.8 wt.-%, more preferably in an amount of 0.5 to 1.6 wt.-%.

The MFR230/2.16 of the crystalline matrix (a) may be in the range of 80 to 200 g/10 min, preferably in the range of 90 to 180 g/10 min, more preferably in the range of 95 to 170 g/10 min.

The crystalline matrix may be multimodal, like bimodal. So, the crystalline matrix comprises at least two polypropylene fractions, namely a first and a second polypropylene fraction (a1 and a2), which may differ in view of their viscosity, their comonomer content, their comonomer type or more than one of these properties.

Preferably, the two polymer fractions comprised by the crystalline matrix differ in view of their comonomer content and/or their viscosities, especially in view of their viscosities. Accordingly it is preferred, that the first polypropylene fraction (a1) differs from the second polypropylene fraction (a2) in view of its comonomer content and its viscosity.

Preferably, the comonomer content and/or the viscosity of the second polypropylene fraction is lower than the comonomer content and/or the viscosity of the first polypropylene fraction.

It is especially preferred, that solely the viscosity of the second polypropylene fraction differs from the viscosity of the first polypropylene fraction, in particular that the viscosity of the second polypropylene fraction is lower than the viscosity of the first polypropylene fraction.

Preferably, the amount of the first polypropylene fraction in the crystalline matrix is equal to or higher than the amount of the second polypropylene fraction based on the total weight of the crystalline matrix.

The amount of the first polypropylene fraction in the crystalline fraction may be in the range of 50 - 75 wt.-%, preferably 52 - 72 wt.-%, more preferably in the range of 55 - 70 wt.-% based on the total weight of the crystalline matrix.

The amount of the second polypropylene fraction may be in the range of 25 - 50 wt.-%, preferably 28 - 48 wt.-%, more preferably in the range of 30 - 45 wt.-% based on the total weight of the crystalline matrix.

The ratio of the amount of the first and the second polypropylene fraction may be in the ranges of 50:50 to 80:20, like 55:45 to 70:30, preferably 60:40 to 65:35.

As pointed out above, the crystalline matrix forms 78 to 95 wt.-%, preferably in the range of 80 to 93 wt.-%, more preferably in the range of 81 to 92 wt.-% of the heterophasic polypropylene composition.

The MFR230/2.16 of first polypropylene fraction may be in the range of 20 to 100 g/10 min, preferably in the range of 25 to 98 g/10 min, more preferably in the range of 30 to 95 g/10 min.

The MFR230/2.16 of second polypropylene fraction may be in the range of 100 to 1000 g/10 min, preferably in the range of 105 to 950 g/10 min, more preferably in the range of 110 to 900 g/10 min.

Said first and second polypropylene fraction may independently from each other be a propylene homo- or copolymer as lined out above.

Each of the first and second polypropylene fraction may (independently from the other) comprise comonomer (as lined out above) in the range of 0.0 to 2.0 wt.-%, preferably in the range of 0.0 to 1.0 wt.-%, preferably in the range of 0.2 to 0.8 wt.-%, more preferably in the range of 0.4 to 0.6 wt.-%.

Each of the first and second polypropylene fraction may (independently from the other) have an fraction soluble in cold xylene (XCS) in the range of 0.0 to 2.0 wt.-%, preferably in the range of 0.2 to 1.6 wt.-%, more preferably in the range of 0.3 to 1.4 wt.-%.

### b) Amorphous propylene ethylene elastomer forming the dispersed phase

The amorphous propylene ethylene elastomer provides 8.0 to 22.0 wt.-%, preferably in the range of 8.0 to 20.0 wt.-%, more preferably in the range of 8.0 to 19.0 wt.-% of the heterophasic polypropylene composition.

The amorphous propylene ethylene elastomer is predominantly characterized via the soluble fraction of CRYSTEX QC method ISO6427-B.

Within the present application, the amorphous propylene ethylene elastomer of the heterophasic polypropylene composition corresponds to the soluble fraction of CRYSTEX QC method ISO6427-B and may be in the range of 8.0 to 22.0 wt.-%, preferably in the range of 9.0 to 21.0 wt.-%, more preferably in the range of 10.0 to 20.0 wt.-%.

The soluble fraction comprises comonomer as lined out above.

The comonomer content of said soluble fraction (C2(SF)) is in the range of 15.0 to 30.0 wt.-%, preferably in the range of at least 16.5 to 28.0 wt.-%, more preferably in the range of 17.5 to 26.0 wt.-%.

The intrinsic viscosity of the soluble fraction, IV(SF), may be in the range of 1.8 to 3.5 dl/g, preferably in the range of 2.0 to 3.2 dl/g, more preferably in the range of 2.1 to 3.1 dl/g.

The amorphous propylene ethylene elastomer (b) may also comprise alpha-olefins selected from C4 to C8 alpha olefins, preferably from 1-butene or 1-hexene. In a preferred embodiment the amorphous propylene ethylene elastomer (b) comprises ethylene and 1-butene as comonomers.

In an especially preferred embodiment, the amorphous propylene ethylene elastomer (b) comprises, more preferably consists of propylene and ethylene as the sole comonomer.

### Additives:

The heterophasic polypropylene composition according to the invention may further comprise conventional additives in an amount of up to 5.0 wt.-%, preferably in an amount of 0.1 to 2.0 wt.-%, more preferably in an amount of 0.3 to 1.0 wt.-%. Examples of additives include, but are not limited to, stabilizers such as antioxidants (for example sterically hindered phenols, phosphites/phosphonites, sulphur containing antioxidants, alkyl radical scavengers, aromatic amines, hindered amine stabilizers, or blends thereof), metal deactivators (for example Irganox ^{®} MD 1024), or UV stabilizers (for example hindered amine light stabilizers). Other typical additives are modifiers such as nucleating agents (for example sodium benzoate or sodium-2,2'-methylene-bis(4,6-di-t-butylphenyl)phosphate), antistatic or antifogging agents (for example ethoxylated amines and amides or glycerol esters), acid scavengers (for example Ca-stearate) and blowing agents for foaming. Further modifiers are lubricants and resins (for example ionomer waxes, polyethylene- and ethylene copolymer waxes, Fischer Tropsch waxes, montan-based waxes, fluoro-based compounds, or paraffin waxes), as well as slip and antiblocking agents (for example erucamide, oleamide, talc, natural silica and synthetic silica or zeolites) and mixtures thereof.

### Physical characterisation of the heterophasic polypropylene composition

The heterophasic polypropylene composition of the present invention can be characterised by its improved, well balanced mechanical properties.

The Flexural Modulus according to ISO178 is in the range of 800 to 1250 MPa, preferably in the range of 850 to 1200 MPa, more preferably in the range of 900 to 1180 MPa.

The Notched Impact Strength (NIS) as determined according to ISO179/1eA at +23°C may be in the range of 3.5 to 20.0kJ/m², preferably in the range of 3.8 to 12.5 kJ/m², more preferably in the range of 4.0 to 10.0 kJ/m².

In a preferred embodiment, the heterophasic polypropylene composition is characterised by
a Flexural Modulus according to ISO178 in the range of 800 to 1250 MPa and
a Notched Impact Strength (NIS) as determined according to ISO179/1eA at +23°C in the range of 3.5 to 20.0kJ/m².

The heterophasic polypropylene composition of the present invention provides a high level of impact strength and a good flowability in the sense of a high MFR-value. This is reflected by a well-balanced ratio of the Notched Impact Strength (NIS) to the MFR:
Ratio NIS/MFR of the inventive polymer may be in the range 0.10 to 1.00 k(J/m²)*(10min/g), preferably in the range of 0.20 to 0.75 (kJ/m²)*(10min/g), more preferably in the range of 0.30 to 0.50 (kJ/m²)*(10min/g).

### Polymerisation Process

The present invention also discloses a process for polymerising the heterophasic polypropylene composition of the present invention.

It disclosed a process for preparing a heterophasic polypropylene composition claims by sequential polymerisation in the presence of a metallocene catalyst system, wherein
a)a first polypropylene fraction being a propylene homopolymer or a propylene-ethylene random copolymer having a comonomer content of 0.0 to 1.0 wt.-% is prepared in a bulk phase reactor in a first polymerisation stage
b) optionally transferring said first polypropylene fraction into second polymerisation stage in which a second polypropylene fraction being a propylene homopolymer or a propylene-ethylene random copolymer having a comonomer content of 0.0 to 1.0 wt.-% is prepared in a gas phase reactor (GPR1),
c) transferring the first polypropylene fraction (a) or the mixture comprising said first and second polypropylene fraction together (b) to a second (optionally third) polymerisation stage in which the amorphous propylene ethylene elastomer having a comonomer content (C2 of XCS) of 15.0 to 30.0 wt.-%, like 16.5 to 28.0 wt.-%, or 17.5 to 26.0 wt.-%. is prepared in a gas phase reactor,
d)the mixture of said two, optionally three polymers, optionally being subjected to a deactivation and purification step followed by compounding and pelletisation.

Preferably, the intrinsic viscosity, namely the IV(SV) of the amorphous propylene ethylene elastomer IV(SF) is 1.8 to 3.5 dl/g.

The polymerisation process is done in the presence of a metallocene catalyst system as laid out herein.

The heterophasic polypropylene composition of the present invention is typically and preferably made in a multistep process well known in the art. A preferred multistage process is a loop-gas phase-process, such as developed by Borealis A/S, Denmark (known as BORSTAR(R) technology) described e.g. in patent literature, such as in EP-A-0887379 or in WO 92/12182.

The invention preferably relates to the copolymerisation of propylene, ethylene and optionally further comonomers as defined above and below, in an at least two, optionally three step process so as to form the heterophasic polypropylene composition. Preferably, propylene and ethylene are the only monomers used.

Ideally, the process of the invention employs two, preferably three main reactors, a first reactor operating in bulk, a first gas phase reactor and optionally a second gas phase reactor.

The process may also utilize a prepolymerisation step, taking place in a separate reactor before the three main reactors.

The crystalline matrix is present in the range of 78 to 92 wt.-%, preferably in the range of 80 to 92 wt.-%, more preferably in the range of 81 to 92 wt.-%, based on the total weight of the heterophasic polypropylene composition.

The elastomeric phase comprised in the heterophasic polypropylene composition and dispersed in above mentioned matrix, is present in the range of 8 to 22 wt.-%, preferably in the range of 8 to 20 wt.-%, more preferably in the range of 8 to 19 wt.-%, based on the total weight of the heterophasic polypropylene composition.

The comonomer content, C2 (total), of the inventive polymer may be in the range of 1.5 to 6.5 wt.-%, preferably in the range of 1.7 to 6.0 wt.-%, more preferably in the range of 1.8 to 5.5 wt.-%.

### Monomodal matrix

The crystalline matrix being a propylene homo- or copolymer is being produced in a bulk step, then transferred to the second stage in which the amorphous propylene ethylene elastomer is produced in a first gas phase reactor (GPR1) in the presence of the first polypropylene fraction.

The comonomer content of the crystalline matrix may be in the range of 0.0 to 1.0 wt.-%, preferably in the range of 0.2 to 0.8 wt.-%, more preferably in the range of 0.4 to 0.6 wt.-%.

In is particularly preferably, that the crystalline matrix (a) is a propylene homopolymer and comprises 0.0 wt.-% of comonomer.

The MFR of the crystalline matrix may be in the range of 80 to 200 g/10 min, preferably in the range of 90 to 180 g/10 min, more preferably in the range of 95 to 170 g/10 min. This applies regardless of the (bi)-modality of the crystalline matrix.

### Bimodal matrix:

In case, the crystalline matrix is bimodal, then the first polypropylene fraction is being produced in a bulk step, then transferred to the second stage in which the second polypropylene fraction is prepared in a first gas phase reactor (GPR1) in the presence of the first polypropylene fraction.

This mixture, being the crystalline matrix and comprising said first and second polypropylene fractions together, is transferred to the third stage in which the amorphous propylene-ethylene elastomer is prepared in a gas phase reactor (GPR2) in the presence of the crystalline matrix.

The MFR230/2.16 of the polymer produced in the first stage, being the first polypropylene fraction, may be in the range of 20 to 100 g/10 min, preferably in the range of 25 to 98 g/10 min, more preferably in the range of 30 to 95 g/10 min.

The MFR230/2.16 of the polymer produced in the second stage, being the second polypropylene fraction, may be in the range of 100 to 1000 g/10 min, preferably in the range of 105 to 950 g/10 min, more preferably in the range of 110 to 900 g/10 min.

Given the second polypropylene fraction is produced in the presence of the first polypropylene fraction, it is understood, that it's properties cannot be analysed as such, but have to be determined based on the properties of the first polypropylene fraction and the properties of the crystalline fraction.

In a preferred embodiment, the heterophasic polypropylene composition comprises
a1) 45 - 65 wt.-%, preferably in the range of 47 to 60 wt.-%, more preferably in the range of 48 to 58 wt.-% of a first polypropylene fraction having an MFR230/2.16 of 20 - 100 g/10 min,
a2) 28 - 30 wt.-%, preferably in the range of 30 to 37 wt.-%, more preferably in the range of 31 to 37 wt.-% of a second polypropylene fraction having an MFR230/2.16 of 100 - 1000 g/10 min,
b) 5 to 22 wt.-% of the amorphous propylene ethylene elastomer, preferably in the range of 7 to 20 wt.-%, more preferably in the range of 8 to 19 wt.-%.

Preferably, the amount of the first polypropylene fraction is equal or higher than the amount of the second polypropylene fraction based on the total weight of the crystalline matrix.

The amount of the first polypropylene fraction may be in the range of 50 - 75 wt.-%, preferably 52 - 72 wt.-%, more preferably in the range of 55 - 70 wt.-% based on the total weight of the crystalline matrix.

The amount of the second polypropylene fraction may be in the range of 25 - 50 wt.-%, preferably 28 - 48 wt.-%, more preferably in the range of 30 - 45 wt.-% based on the total weight of the crystalline matrix.

The ratio of the amount of the first and the second polypropylene fraction may be in the ranges of 50:50 to 80:20, like 55:45 to 70:30, preferably 60:40 to 65:35.

For bulk and gas phase copolymerisation reactions, the reaction temperature used will generally be in the range 60 to 115 °C (e.g. 70 to 110 °C), the reactor pressure will generally be in the range 10 to 40 bar for gas phase reactions with bulk polymerisation operating at slightly higher pressures. The residence time will generally be 0.25 to 8 hours (e.g. 0.3 to 3 hours).

The comonomer content of the first and second polypropylene fraction may be same or different and independently chosen from each other.

The comonomer content of the first polypropylene fraction is

The comonomer content of the polymer produced in the first stage, namely the first polypropylene fraction, may be in the range of 0.0 to 1.0 wt.-%, preferably in the range of 0.2 to 0.8 wt.-%, more preferably in the range of 0.4 to 0.6 wt.-%.

In is particularly preferably, that the first polypropylene fraction is a propylene homopolymer and comprises 0.0 wt.-% of comonomer.

The comonomer content of the polymer produced in the second stage, namely the second polypropylene fraction, may be in the range of 0.0 to 1.0 wt.-%, preferably in the range of 0.2 to 0.8 wt.-%, more preferably in the range of 0.4 to 0.6 wt.-%.

In is particularly preferably, that the second polypropylene fraction is a propylene homopolymer and comprises 0.0 wt.-% of comonomer.

Within this application it is understood, that the comonomer content of the crystalline matrix, when available as distinct material sample, is determined via NMR analysis. When the comonomer content of the matrix and the dispersed fraction should be evaluated starting from the final polymer (comprising both the matrix and the dispersed fraction), then the matrix (and its properties) is reflected by the crystalline fraction (CF) determined according to CRYSTEX QC method, ISO 6427-B. Accordingly, the dispersed amorphous propylene ethylene elastomer is reflected by the soluble fraction (SF) determined according to CRYSTEX QC method, ISO 6427-B.

### Catalyst system:

The heterophasic polypropylene composition according to the invention is preferably obtainable by a catalyst system comprising by a single-site catalyst, more preferably being obtainable by a metallocene catalyst complex and cocatalysts.

Preferred complexes of the metallocene catalyst include:
rac-dimethylsilanediylbis[2-methyl-4-(3',5'-dimethylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4-(4'-tert-butylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4-phenyl-5-methoxy-6-tert-butylinden-1-yl] zirconium dichloride,
rac-anti-dimethylsilanediyl[2-methyl-4-(3',5'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(4'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride.

Especially preferred is rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride.

### Cocatalyst

To form an active catalytic species it is normally necessary to employ a cocatalyst as is well known in the art.

According to the present invention a cocatalyst system comprising a boron containing cocatalyst and an aluminoxane cocatalyst is used in combination with the above defined metallocene catalyst complex.

The aluminoxane cocatalyst can be one of formula (I): 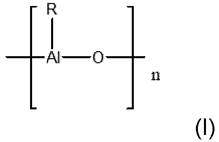 where n is from 6 to 20 and R has the meaning below.

Aluminoxanes are formed on partial hydrolysis of organoaluminum compounds, for example those of the formula AlR₃, AlR₂Y and Al₂R₃Y₃ where R can be, for example, C₁-C₁₀-alkyl, preferably C₁-C₅-alkyl, or C₃-C₁₀-cycloalkyl, C₇-C₁₂-arylalkyl or -alkylaryl and/or phenyl or naphthyl, and where Y can be hydrogen, halogen, preferably chlorine or bromine, or C₁-C₁₀-alkoxy, preferably methoxy or ethoxy. The resulting oxygen-containing aluminoxanes are not in general pure compounds but mixtures of oligomers of the formula (II).

The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.

Also a boron containing cocatalyst is used in combination with the aluminoxane cocatalyst.

The catalyst complex ideally comprises a co-catalyst, certain boron containing cocatalysts are preferred. Especially preferred borates of use in the invention therefore comprise the trityl, i.e. triphenylcarbenium, ion. Thus the use of Ph₃CB(PhF₅)₄ and analogues therefore are especially favoured.

The catalyst system of the invention is used in supported form. The particulate support material used is silica or a mixed oxide such as silica-alumina, in particular silica.

The use of a silica support is preferred. The skilled man is aware of the procedures required to support a metallocene catalyst.

In a preferred embodiment, the catalyst system corresponds to the ICS3 of EP19177308.4.

### Articles

The present invention also covers final articles, especially moulded articles comprising the heterophasic polypropylene composition of the present invention.

The articles may be injection moulded and may be used for packaging purposes or for application in the automotive industry.

Preferably said articles have a wall thickness of 0.1 to 3.0 mm, such as 0.5 to 2.5 mm, like 1.0 to 2.0 mm.

The present invention will now be described in further detail by the examples provided below:

### Examples:

### Measuring methods

### Melt Flow Rate (MFR₂)

The melt flow rate (MFR₂) is determined according to ISO 1133 and is indicated in g/10 min. The MFR is an indication of the flowability, and hence the processability, of the polymer. The higher the melt flow rate, the lower the viscosity of the polymer. The MFR₂ of polypropylene is determined at a temperature of 230 °C and a load of 2.16 kg.

### Differential scanning calorimetry (DSC)

Differential scanning calorimetry (DSC) analysis, melting temperature (Tₘ) and melt enthalpy (Hₘ), crystallization temperature (T_{c}), and heat of crystallization (H_{c}, H_{CR}) are measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. Crystallization temperature (T_{c}) and heat of crystallization (H_{c}) are determined from the cooling step, while melting temperature (Tₘ) and melt enthalpy (Hm) are determined from the second heating step.

### Xylene Cold Soluble (XCS)

Xylene Cold Soluble fraction at room temperature (XCS, wt.-%) is determined at 25°C according to ISO 16152; 5^{th} edition; 2005-07-01.

### Flexural Modulus

The flexural modulus was determined in 3-point-bending at 23°C according to ISO 178 on 80x10x4 mm³ test bars injection moulded in line with EN ISO 1873-2.

### Notched impact strength (NIS):

The Charpy notched impact strength (NIS) was measured according to ISO 179 1eA at +23°C or -20°C, using injection moulded bar test specimens of 80x10x4 mm³ prepared in accordance with EN ISO 1873-2.

### Hexane soluble fraction (C6 FDA)

The amount of hexane extractable polymer according to FDA method (federal registration, title 21, Chapter 1, part 177, section 1520, s. Annex B) was determined from films produced on a PM30 cast film extrusion line with about 220 °C melt temperature with L/D of 20 and a screw diameter of 30 mm (feed zone 4 D long, 5.8 mm deep, compression zone 10 D long, metering zone 6 D long, 2.3 mm deep utilising a screen pack 36 - 400 - 900 - 400 mesh/cm²). A 200 mm die with a 0.55 to 0.60 mm die gap, screw speed: 50 r/min, and chill roll temperature of water: both rolls 40 °C (heating-cooling unit), Air gap: 0.5 mm, Air knife blower air supply: 1 bar. The film thickness is 100 µm.

The amount of hexane soluble polymer is determined according to FDA method (federal registration, title 21, Chapter 1, part 177, section 1520, s. Annex B) from the film samples prepared as described above. The extraction was performed at a temperature of 50 °C and an extraction time of 2 hours.

### Crystex analysis

### Crystalline and soluble fractions method

The crystalline (CF) and soluble fractions (SF) of the polypropylene (PP) compositions as well as the comonomer content and intrinsic viscosities of the respective fractions were analyzed by the CRYSTEX QC, Polymer Char (Valencia, Spain).

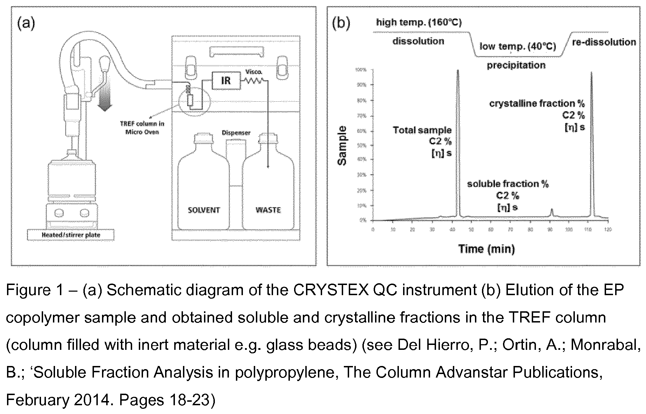

A schematic representation of the CRYSTEX QC instrument is shown in Figure 1a. The crystalline and amorphous fractions are separated through temperature cycles of dissolution at 160°C, crystallization at 40°C and re-dissolution in a 1,2,4-trichlorobenzene (1,2,4-TCB) at 160°C as shown in Figure 1b. Quantification of SF and CF and determination of ethylene content (C2) are achieved by means of an infrared detector (IR4) and an online 2-capillary viscometer which is used for the determination of the intrinsic viscosity (IV).

The IR4 detector is a multiple wavelength detector detecting IR absorbance at two different bands (CH3 and CH2) for the determination of the concentration and the Ethylene content in Ethylene-Propylene copolymers. IR4 detector is calibrated with series of 8 EP copolymers with known Ethylene content in the range of 2 wt.-% to 69 wt.-% (determined by 13C-NMR) and various concentration between 2 and 13mg/ml for each used EP copolymer used for calibration.

The amount of Soluble fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 Wt.-%.

The intrinsic viscosity (IV) of the parent EP copolymer and its soluble and crystalline fractions are determined with a use of an online 2-capillary viscometer and are correlated to corresponding IV's determined by standard method in decalin according to ISO 1628. Calibration is achieved with various EP PP copolymers with IV = 2-4 dL/g.

A sample of the PP composition to be analyzed is weighed out in concentrations of 10mg/ml to 20mg/ml. After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 800rpm.

As shown in a Figure 1a and b, a defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.-%] of the PP composition. During the second injection the soluble fraction (at low temperature) and the crystalline fraction (at high temperature) with the crystallization cycle are measured (wt.-% SF, wt.-% C2, IV).

### EP means ethylene propylene copolymer.

PP means polypropylene.

### Comonomer content (of the neat crystalline matrix)

Quantitative infrared (IR) spectroscopy was used to quantify the ethylene content of the poly(ethylene-co-propene) copolymers through calibration to a primary method. Calibration was facilitated through the use of a set of in-house non-commercial calibration standards of known ethylene contents determined by quantitative ¹³C solution-state nuclear magnetic resonance (NMR) spectroscopy. The calibration procedure was undertaken in the conventional manner well documented in the literature. The calibration set consisted of 38 calibration standards with ethylene contents ranging 0.2-75.0 wt% produced at either pilot or full scale under a variety of conditions. The calibration set was selected to reflect the typical variety of copolymers encountered by the final quantitative IR spectroscopy method.

Quantitative IR spectra were recorded in the solid-state using a Bruker Vertex 70 FTIR spectrometer. Spectra were recorded on 25x25 mm square films of 300 um thickness prepared by compression moulding at 180 - 210°C and 4 - 6 mPa. For samples with very high ethylene contents (>50 mol%) 100 um thick films were used. Standard transmission FTIR spectroscopy was employed using a spectral range of 5000-500 cm⁻¹, an aperture of 6 mm, a spectral resolution of 2 cm⁻¹, 16 background scans, 16 spectrum scans, an interferogram zero filling factor of 64 and Blackmann-Harris 3-term apodisation.

Quantitative analysis was undertaken using the total area of the CH₂ rocking deformations at 730 and 720 cm⁻¹ (A_{Q}) corresponding to (CH₂)_{>2} structural units (integration method G, limits 762 and 694 cm⁻¹). The quantitative band was normalised to the area of the CH band at 4323 cm⁻¹ (A_{R}) corresponding to CH structural units (integration method G, limits 4650, 4007 cm⁻¹). The ethylene content in units of weight percent was then predicted from the normalised absorption (*A_{Q}* / *A_{R}*) using a quadratic calibration curve. The calibration curve having previously been constructed by ordinary least squares (OLS) regression of the normalised absorptions and primary comonomer contents measured on the calibration set.

### Poly(propylene-co-ethylene) - ethylene content for calibration using ¹³C NMR spectroscopy

Quantitative ¹³C{¹H} NMR spectra were recorded in the solution-state using a Bruker Avance III 400 NMR spectrometer operating at 400.15 and 100.62 MHz for ¹H and ¹³C respectively. All spectra were recorded using a ¹³C optimised 10 mm extended temperature probehead at 125°C using nitrogen gas for all pneumatics. Approximately 200 mg of material was dissolved in 3 ml of *1,2*-tetrachloroethane-*d*₂ (TCE-*d₂*) along with chromium (III) acetylacetonate (Cr(acac)₃) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225, Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative ¹³C{¹H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950) and the comonomer fraction calculated as the fraction of ethylene in the polymer with respect to all monomer in the polymer: fE = ( E / ( P + E ) The comonomer fraction was quantified using the method of Wang et. al. (Wang, W-J., Zhu, S., Macromolecules 33 (2000), 1157) through integration of multiple signals across the whole spectral region in the ¹³C{¹H} spectra. This method was chosen for its robust nature and ability to account for the presence of regio-defects when needed. Integral regions were slightly adjusted to increase applicability across the whole range of encountered comonomer contents. The mole percent comonomer incorporation was calculated from the mole fraction: E [mol%] = 100 * fE. The weight percent comonomer incorporation was calculated from the mole fraction: E [wt%] = 100 * ( fE * 28.06 ) / ( (fE * 28.06) + ((1-fE) * 42.08) )

### Catalyst description

### Catalyst synthesis

The metallocene (MC) used was *Anti*-dimethylsilanediyl[2-methyl-4,8-di(3,5-dimethylphenyl)-1,5,6,7-tetrahydro-s-indacen-1-yl][2-methyl-4-(3,5-dimethylphenyl)-5-methoxy-6-*tert*-butylinden-1-yl] zirconium dichloride as disclosed in EP19177308.4 as ICS3.

### Preparation of MAO-silica support

A steel reactor equipped with a mechanical stirrer and a filter net was flushed with nitrogen and the reactor temperature was set to 20 °C. Next silica grade DM-L-303 from AGC Si-Tech Co, pre-calcined at 600 °C (5.0 kg) was added from a feeding drum followed by careful pressuring and depressurising with nitrogen using manual valves. Then toluene (22 kg) was added. The mixture was stirred for 15 min. Next 30 wt% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated SiO2 was dried at 60° under nitrogen flow for 2 hours and then for 5 hours under vacuum (-0.5 barg) with stirring. MAO treated support was collected as a free-flowing white powder found to contain 12.2% Al by weight.

### Catalyst preparation

30 wt% MAO in toluene (0.7 kg) was added into a steel nitrogen blanked reactor via a burette at 20 °C. Toluene (5.4 kg) was then added under stirring. The MC as cited above (93 g) was added from a metal cylinder followed by flushing with 1 kg toluene. The mixture was stirred for 60 minutes at 20 °C . Trityl tetrakis(pentafluorophenyl) borate (91 g) was then added from a metal cylinder followed by a flush with 1 kg of toluene. The mixture was stirred for 1 h at room temperature. The resulting solution was added to a a stirred cake of MAO-silica support prepared as described above over 1 hour. The cake was allowed to stay for 12 hours, folled by drying under N2 flow at 60°C for 2h and additionaly for 5 h under vacuum (-0.5 barg) under stirring. Dried catalyst was sampled in the form of pink free flowing powder containing 13.9% Al and 0.11% Zr.

### Material description:

**Table 1 Polymerisation Data**

| | | IE1 | IE2 | IE3 | CE1 | CE2 | CE3 |
|---|---|---|---|---|---|---|---|
| | | | | | | | |

| **Prepolymerisation** | | | | | | | |
|---|---|---|---|---|---|---|---|
| TEAL | g/t C3 | 0 | 0 | 0 | 170 | 30 | 0 |
| Donor | g/t C3 | 0 | 0 | 0 | 40 | 200 | 0 |
| Temperature | °C | 25 | 25 | 25 | 26 | 26 | 20 |
| Resisdence time | min | 20 | 20 | 20 | 20 | 20 | 24 |

| **Loop** | | | | | | | |
|---|---|---|---|---|---|---|---|
| Temperature | °C | 70 | 70 | 78 | 70 | 75 | 75 |
| Split | wt% | 51 | 49.2 | 53.4 | 34 | 49 | 39 |
| Feed H2/C3 | mol/kmol | 0.41 | 0.40 | 0.28 | 0.10 | 17.2 | 0.2 |
| MFR | g/10min | 94 | 60 | tbd | 0.32 | 80 | 5.6 |

| **First GPR** | | | | | | | |
|---|---|---|---|---|---|---|---|
| Temperature | °C | 70 | 70 | 80 | 70 | 80 | 80 |
| Split | wt% | 34 | 32.8 | 35.6 | 53 | 35 | 48 |
| H2/C3 | mol/kmol | 3.6 | 3.7 | 5.5 | 1.1 | 17.2 | 1.6 |
| MFR | g/10min | 106 | 102 | 128 | 0.3 | 80 | 1.6 |

| **Second GPR** | | | | | | | |
|---|---|---|---|---|---|---|---|
| Temperature | °C | 70 | 70 | 70 | 70 | 80 | 70 |
| C2/C3 | mol/kmol | 812 | 807 | 785 | 528 | 550 | 575 |
| H2/C2 | mol/kmol | 2 | 2 | 3 | 176 | 150 | 2.5 |
| Split | wt% | 15 | 18 | 11 | 13 | 16 | 13 |
| MFR₂ | | 53 | 43 | 82 | 0.4 | 42 | 2.1 |
| | | | | | | | |

| **Pellet** | | | | | | | |
|---|---|---|---|---|---|---|---|
| XCS | wt% | 13.9 | 17.5 | 11.8 | 14.2 | 17 | 14.4 |
| C2(XCS) | wt% | 19.1 | 18.5 | 20.8 | 34.0 | 34.2 | 13.4 |
| iV(XCS) | dl/g | 2.9 | 2.4 | 2.5 | 1.5 | 2.3 | 1.6 |
| Visbreaking ratio* | - | 1.0 | 1.0 | 1.0 | 12.5 | 1.9 | 1.0 |
| Tm | °C | 154 | 154 | 154 | 165 | 165 | 153 |
| Tc | °C | 115 | 114 | 114 | 120 | 124 | 103 |

| | | | | | | | |
|---|---|---|---|---|---|---|---|
| * Visbreaking ratio is the relation of MFR₂ after visbreaking to the initial value before visbreaking. | | | | | | | |

CE1 is a heterophasic propylene ethylene copolymer, produced based on a Ziegler Natta catalyst. It has a starting MFR of 0,4 g/10min and is visbroken to MFR 5 g/10min.

CE2 is heterophasic propylene ethylene copolymer, produced based on a Ziegler Natta catalyst and a non-phthalate based internal donor.

CE3 is IE1 of WO/2019/121599A1

**Table 2: Physical characterisation of the Inventive and Comparative Examples**

| | | IE1 | IE2 | IE3 | CE1 | CE2 | CE3 |
|---|---|---|---|---|---|---|---|
| | | | | | | | |
| MFR | g/10min | 53 | 43 | 82 | 5 | 80 | 2.0 |
| SF | wt% | 15.5 | 18.1 | 11.1 | 15.0 | 17.0 | 12.5 |
| C2 | wt% | 3.5 | 4.1 | 2.6 | 6.2 | 6.4 | 4.5 |
| C2(SF) | wt% | 18.1 | 17.6 | 19.4 | 34.0 | 34.0 | 15.5 |
| C2(CF) | wt% | 1.1 | 1.4 | 1.1 | 2.4 | 1.1 | 3.5 |
| IV(SF) | dl/g | 2.6 | 2.7 | 2.0 | 1.7 | 2.3 | 1.6 |
| XCS | wt% | 13.9 | 17.5 | 11.8 | 14.2 | 17.0 | 14.4 |
| C6_{FDA} | wt% | 1.4 | 1.6 | 1.3 | 3.0 | 3.5 | 0.6 |
| Ratio SF/C6_{FDA} | - | 11.2 | 11.4 | 8.8 | 5.0 | 4.9 | 20.8 |
| Flexural Modulus | MPa | 993 | 934 | 1131 | 952 | 1226 | 700 |
| NIS/23°C | kJ/m2 | 6.6 | 8.1 | 4.5 | 7.9 | 5.1 | 25.2 |
| Ratio NIS/MFR | | 0.12 | 0.19 | 0.06 | 1.58 | 0.06 | 12.60 |

Table 2 above indicates, that the heterophasic propylene copolymer has a well balanced stiffness and impact strength, combined with a good processability in the sense of a high Melt Flow Rate (MFR₂),

The heterophasic polypropylene compositions have a low amount of a soluble fraction (SF) and low amounts of the hexane extractible fraction (C6_{FDA}), as well as an low ratio between the soluble fraction (SF) to the C6_{FDA}.

## Claims

1. Heterophasic polypropylene composition comprising
a) 78.0 to 92.0 wt.-% of a crystalline matrix being a propylene homo- or copolymer, said crystalline matrix corresponding to the crystalline fraction (CF) determined according to CRYSTEX QC method, ISO 6427-B and containing 0.0 to 2.0 wt.-% comonomer and
b) 8.0 to 22.0 wt.-% of an amorphous propylene-ethylene elastomer, optionally comprising of C4-C12 alpha -olefin(s) as further comonomers, dispersed in said crystalline matrix (a), wherein a) and b) add up to 100 wt.-%, and
wherein said amorphous propylene ethylene elastomer (b) corresponds to the soluble fraction (SF) determined according to CRYSTEX QC method, ISO 6427-B and contains 15.0 to 30.0 wt.-% of comonomer,
wherein the heterophasic polypropylene composition is **characterised by**
a Melt flow rate MFR230/2.16 determined according to ISO1133 of 30 to 120 g/10 min,
a hexane-soluble fraction according to FDA method, C6FDA federal registration, title 21, Chapter 1, part 177, section 1520, Annex B, of 0.8 to 2.8 wt.-%,
a Flexural Modulus according to ISO178 of 800 to 1250 MPa; and
wherein said heterophasic polypropylene composition is produced in the presence of a metallocene catalyst.

2. The heterophasic polypropylene composition according to claim 1, comprising
a) 79.0 to 91.0 wt.-%, preferably 80.0 to 90.0 wt.-% of a crystalline matrix corresponding to the crystalline fraction (CF) determined according to CRYSTEX QC method, ISO 6427-B
b) 9.0 to 21.0 wt.-%, preferably 10.0 to 20.0 wt.-% of an amorphous propylene-ethylene elastomer dispersed in said crystalline matrix (a), wherein a) and b) add up to 100 wt.-%.

3. The heterophasic polypropylene composition according to any of the preceding claims, wherein said crystalline fraction (CF) contains 0.5 to 1.8 wt.-%, preferably 0.7 to 1.6 wt.-% of comonomer and/or wherein said amorphous propylene ethylene elastomer (b) corresponds to the soluble fraction (SF) determined according to CRYSTEX QC method, ISO 6427-B and contains 16.5 to 28.0 wt.-%, preferably 17.5 to 26.0 wt.-% of comonomer.

4. The heterophasic polypropylene composition according to any of the preceding claims wherein the Intrinsic Viscosity (IV) of the soluble fraction (SF) determined according to ISO1628 is 1.8 to 3.5 dl/g, preferably 2.0 to 3.2 dl/g, more preferably 2.1 to 3.1 dl/g.

5. The heterophasic polypropylene composition according to any of the preceding claims wherein the Melt Flow Rate MFR230/2.16 determined according to ISO1133 is 35 to 110 g/10 min, preferably 38 to 100 g/10 min and/or the hexane-soluble fraction according to FDA method (C6FDA) is 1.0 to 2.3 wt.-%, preferably 1.1 to 2.0 wt.-%.

6. The heterophasic polypropylene composition according to any of the preceding claims having a total comonomer content of 1.5 to 6.5 wt.-%, preferably of 1.7 to 6.0 wt.-%, more preferably of 1.8 to 5.5 wt.-%.

7. The heterophasic polypropylene composition according to any of the preceding claims **characterised by** a Notched Impact Strength NIS determined according to ISO179/1eA at +23 °C in the range of 3.5 to 20.0 kJ/m², preferably in the range of 3.8 to 12.5 kJ/m², more preferably in the range of 4.0 to 10.0 kJ/m².

8. The heterophasic polypropylene composition according to any of the preceding claims **characterised by** a Flexural Modulus according to ISO178 of 850 to 1200 MPa, preferably 900 to 1180 MPa.

9. The heterophasic polypropylene composition according to any of the preceding claims having a ratio of the soluble fraction (SF) determined according to CRYSTEX QC method, ISO 6427-B to the hexane-soluble fraction according to FDA method (C6FDA), (ratio SF/C6FDA), of 3.0 to 15.0, preferably in the range of 3.0 to 14.0, more preferably in the range of 6.0 to 12.0.

10. The heterophasic polypropylene composition according to any of the preceding claims having an fraction soluble in cold xylene (XCS) in the range of 8.0 - 22.0 wt.-%, preferably 9.0 - 21.0 wt.-%, more preferably 10.0 - 20.0 wt.-%.

11. A process for preparing a heterophasic polypropylene composition according to any of the preceding claims by sequential polymerisation in the presence of a metallocene catalyst, wherein
a) a first polypropylene fraction being a propylene homopolymer or a propylene-ethylene random copolymer having a comonomer content of 0.0 to 1.0 wt.-% is prepared in a bulk phase reactor in a first polymerisation stage
b) optionally transferring said first polypropylene fraction into second polymerisation stage in which a second polypropylene fraction being a propylene homopolymer or a propylene-ethylene random copolymer having a comonomer content of 0.0 to 1.0 wt.-% is prepared in a gas phase reactor (GPR1),
c) transferring the first polypropylene fraction (a) or the mixture comprising said first and second polypropylene fraction together (b) to a second (optionally third) polymerisation stage in which the amorphous propylene ethylene elastomer having a comonomer content (C2 of XCS) of 15.0 to 30.0 wt.-%, like 16.5 to 28.0 wt.-%, or 17.5 to 26.0 wt.-%, is prepared in a gas phase reactor,
d) the mixture of said two, optionally three polymers, optionally being subjected to a deactivation and purification step followed by compounding and pelletization.

12. A process according to claim 11, wherein the amorphous propylene ethylene elastomer produced in c) has an IV(SF) of 1.8 to 3.5 dl/g,

13. Article preferably injection moulded article, comprising the heterophasic polypropylene composition of any of the proceeding claims.

14. Use of the heterophasic polypropylene composition for producing articles, preferably for producing injection moulded articles

## Patentansprüche

1. Heterophasische Polypropylen-Zusammensetzung, umfassend:
a) 78,0 bis 92,0 Gew.-% einer kristallinen Matrix, die ein Propylen-Homo- oder Copolymer ist, wobei die kristalline Matrix der kristallinen Fraktion (CF), bestimmt gemäß der CRYSTEX QC-Methode, ISO 6427-B, entspricht und 0,0 bis 2,0 Gew.-% eines Comonomers enthält, und
b) 8,0 bis 22,0 Gew.-% eines amorphen Propylen-Ethylen-Elastomers, das optional C4-C12-Alphaolefin(e) als weitere in der kristallinen Matrix (a) dispergierte Comonomere aufweist, wobei a) und b) gemeinsam 100 Gew.-% ausmachen,
wobei das amorphe Propylen-Ethylen-Elastomer (b) der löslichen Fraktion (SF), bestimmt gemäß der CRYSTEX QC-Methode, ISO 6427-B, entspricht und 15,0 bis 30,0 Gew.-% eines Comonomers enthält,
wobei die heterophasische Polypropylen-Zusammensetzung **gekennzeichnet ist durch**:
eine Schmelzflussrate MFR230/2,16, bestimmt gemäß ISO1133, von 30 bis 120 g/10 min,
eine Hexan-lösliche Fraktion gemäß der FDA-Methode, C6FDA Federal Registration, Titel 21, Kapitel 1, Teil 177, Abschnitt 1520, Anhang B, von 0,8 bis 2,8 Gew.-%,
ein Biegemodul gemäß ISO178 von 800 bis 1250 MPa, und
wobei die heterophasische Polypropylen-Zusammensetzung in der Anwesenheit eines metallocenen Katalysators hergestellt wird.

2. Heterophasische Polypropylen-Zusammensetzung nach Anspruch 1, die umfasst:
a) 79,0 bis 91,0 Gew.-% und vorzugsweise 80,0 bis 90,0 Gew.-% einer kristallinen Matrix in Entsprechung zu der kristallinen Fraktion (CF), bestimmt gemäß der CRYSTEX QC-Methode, ISO 6427-B,
b) 9,0 bis 21,0 Gew.-% und vorzugsweise 10,0 bis 20,0 Gew.-% eines amorphen Propylen-Ethylen-Elastomers, das in der kristallinen Matrix (a) dispergiert ist, wobei a) und b) gemeinsam 100 Gew.-% ausmachen.

3. Heterophasische Polypropylen-Zusammensetzung nach einem der vorstehenden Ansprüche, wobei die kristalline Fraktion (CF) 0,5 bis 1,8 Gew.-% und vorzugsweise 0,7 bis 1,6 Gew.-% eines Comonomers enthält und/oder wobei das amorphe Propylen-Ethylen-Elastomer (b) der löslichen Fraktion (SF), bestimmt gemäß der CRYSTEX QC-Methode, ISO 6427-B, entspricht und 16,5 bis 28,0 Gew.-% und vorzugsweise 17,5 bis 26,0 Gew.-% eines Comonomers enthält.

4. Heterophasische Polypropylen-Zusammensetzung nach einem der vorstehenden Ansprüche, wobei die intrinsische Viskosität (IV) der löslichen Fraktion (SF), bestimmt gemäß ISO1628, 1,8 bis 3,5 dl/g, vorzugsweise 2,0 bis 3,2 dl/g und noch besser 2,1 bis 3,1 dl/g beträgt.

5. Heterophasische Polypropylen-Zusammensetzung nach einem der vorstehenden Ansprüche, wobei die Schmelzflussrate MFR230/2,16, bestimmt gemäß ISO 1133, 35 bis 110 g/10 min und vorzugsweise 38 bis 100 g/10 min beträgt und/oder wobei die Hexan-lösliche Fraktion gemäß der FDA-Methode (C6FDA) 1,0 bis 2,3 Gew.-% und vorzugsweise 1,1 bis 2,0 Gew.-% beträgt.

6. Heterophasische Polypropylen-Zusammensetzung nach einem der vorstehenden Ansprüche, die einen Monomer-Gesamtanteil von 1,5 bis 6,5 Gew.-%, vorzugsweise 1,7 bis 6,0 Gew.-% und noch besser 1,8 bis 5,5 Gew.-% aufweist.

7. Heterophasische Polypropylen-Zusammensetzung nach einem der vorstehenden Ansprüche, **gekennzeichnet durch** eine Kerbschlagzähigkeit, bestimmt gemäß ISO179/1eA bei +23°C, im Bereich von 3,5 bis 20,0 kJ/m², vorzugsweise im Bereich von 3,8 bis 12,5 kJ/m² und noch besser im Bereich von 4,0 bis 10,0 kJ/m².

8. Heterophasische Polypropylen-Zusammensetzung nach einem der vorstehenden Ansprüche, **gekennzeichnet durch** ein Biegemodul gemäß ISO178 von 850 bis 1200 MPa und vorzugsweise 900 bis 1180 MPa.

9. Heterophasische Polypropylen-Zusammensetzung nach einem der vorstehenden Ansprüche, die ein Verhältnis der löslichen Fraktion (SF), bestimmt gemäß der CRYSTEC QC-Methode, ISO 6427-B, zu der Hexan-löslichen Fraktion gemäß der FDA-Methode (C6FDA) (Verhältnis SF/C6FDA), von 3,0 bis 15,0, vorzugsweise im Bereich von 3,0 bis 14,0 und noch besser im Bereich von 6,0 bis 12,0 aufweist.

10. Heterophasische Polypropylen-Zusammensetzung nach einem der vorstehenden Ansprüche, die eine in kaltem Xylen (XCS) lösliche Fraktion im Bereich von 8,0 bis 22,0 Gew.-%, vorzugsweise 9,0 bis 21,0 Gew.-% und noch besser 10,0 bis 20,0 Gew.-% aufweist.

11. Verfahren zum Vorbereiten einer heterophasischen Polypropylen-Zusammensetzung nach einem der vorstehenden Ansprüche durch eine sequentielle Polymerisation in Anwesenheit eines metallocenen Katalysators, wobei:
a) eine erste Polypropylen-Fraktion, die ein Propylen-Homopolymer oder ein Propylen-Ethylen-Random-Copolymer mit einem Comonomer-Anteil von 0,0 bis 1,0 Gew.-% ist, in einem Bulkphasenreaktor in einer ersten Polymerisationsstufe vorbereitet wird,
b) optionales Übertragen der ersten Polypropylen-Fraktion zu einer zweiten Polymerisationsstufe, in der eine zweite Polypropylen-Fraktion, die ein Propylen-Homopolymer oder ein Propylen-Ethylen-Random-Copolymer mit einem Comonomer-Anteil von 0,0 bis 1,0 Gew.-% ist, in einem Gasphasenreaktor (GPR1) vorbereitet wird,
c) Übertragen der ersten Polypropylen-Fraktion (a) oder der Mischung, die die erste und die zweite Polypropylen-Fraktion enthält, zusammen (b) zu einer zweiten (optional dritten) Polymerisationsstufe, in der das amorphe Propylen-Ethylen-Elastomer mit einem Comonomer-Anteil (C2 von XCS) von 15,0 bis 30,0 Gew.-% wie etwa 16,5 bis 28,0 Gew.-% oder 17,5 bis 26,0 Gew.-% in einem Gasphasenreaktor vorbereitet wird,
d) die Mischung aus den zwei, optional drei Polymeren optional einem Deaktivierungs- und Reinigungsschritt, auf den eine Compounding und Pelletierung folgen, unterworfen wird.

12. Verfahren nach Anspruch 11, wobei das in c) erzeugte amorphe Propylen-Ethylen-Elastomer eine IV(SF) von 1,8 bis 3,5 dl/g aufweist.

13. Artikel, der vorzugsweise ein spritzgegossener Artikel ist und die heterophasische Polypropylen-Zusammensetzung gemäß einem der vorstehenden Ansprüche umfasst.

14. Verwendung der heterophasischen Polypropylen-Zusammensetzung für das Herstellen von Artikeln und vorzugsweise für das Herstellen von spritzgegossenen Artikeln.

## Revendications

1. Composition de polypropylène hétérophasique comprenant
a) 78,0 à 92,0 % en poids d'une matrice cristalline qui est un homo- ou copolymère de propylène, ladite matrice cristalline correspondant à la fraction cristalline (CF) déterminée selon le procédé CRYSTEX QC, ISO 6427-B et contenant 0,0 à 2,0 % en poids de comonomère et
b) 8,0 à 22,0 % en poids d'un élastomère de propylène-éthylène amorphe, comprenant éventuellement une ou plusieurs alpha-oléfines en C4-C12 en tant que comonomères supplémentaires, dispersé dans ladite matrice cristalline (a), a) et b) totalisant 100 % en poids, et
ledit élastomère de propylène-éthylène amorphe (b) correspondant à la fraction soluble (SF) déterminée selon le procédé CRYSTEX QC, ISO 6427-B et contenant 15,0 à 30,0 % en poids de comonomère,
la composition de polypropylène hétérophasique étant **caractérisée par** un indice de fluidité à chaud MFR230/2,16 déterminé selon la norme ISO 1133 de 30 à 120 g/10 min,
une fraction soluble dans l'hexane selon le procédé FDA, enregistrement fédéral C6FDA, titre 21, chapitre 1, partie 177, section 1520, annexe B, de 0,8 à 2,8 % en poids,
un module de flexion selon la norme ISO 178 de 800 à 1 250 MPa ; et
ladite composition de polypropylène hétérophasique étant produite en présence d'un catalyseur métallocène.

2. Composition de polypropylène hétérophasique selon la revendication 1, comprenant
a) 79,0 à 91,0 % en poids, de préférence 80,0 à 90,0 % en poids d'une matrice cristalline correspondant à la fraction cristalline (CF) déterminée selon le procédé CRYSTEX QC, ISO 6427-B
b) 9,0 à 21,0 % en poids, de préférence 10,0 à 20,0 % en poids, d'un élastomère de propylène-éthylène amorphe dispersé dans ladite matrice cristalline (a), a) et b) totalisant 100 % en poids.

3. Composition de polypropylène hétérophasique selon l'une quelconque des revendications précédentes, ladite fraction cristalline (CF) contenant 0,5 à 1,8 % en poids, de préférence 0,7 à 1,6 % en poids de comonomère et/ou ledit élastomère de propylène-éthylène amorphe (b) correspondant à la fraction soluble (SF) déterminée selon le procédé CRYSTEX QC, ISO 6427-B et contenant 16,5 à 28,0 % en poids, de préférence 17,5 à 26,0 % en poids de comonomère.

4. Composition de polypropylène hétérophasique selon l'une quelconque des revendications précédentes, la viscosité intrinsèque (IV) de la fraction soluble (SF) déterminée selon la norme ISO 1628 étant de 1,8 à 3,5 dl/g, de préférence de 2,0 à 3,2 dl/g, plus préférablement de 2,1 à 3,1 dl/g.

5. Composition de polypropylène hétérophasique selon l'une quelconque des revendications précédentes, l'indice de fluidité à chaud MFR230/2.16, déterminé selon la norme ISO 1133, étant de 35 à 110 g/10 min, de préférence de 38 à 100 g/10 min, et/ou la fraction soluble dans l'hexane selon le procédé FDA (C6FDA) étant de 1,0 à 2,3 % en poids, de préférence de 1,1 à 2,0 % en poids.

6. Composition de polypropylène hétérophasique selon l'une quelconque des revendications précédentes, ayant une teneur totale en comonomère de 1,5 à 6,5 % en poids, de préférence de 1,7 à 6,0 % en poids, plus préférablement de 1,8 à 5,5 % en poids.

7. Composition de polypropylène hétérophasique selon l'une quelconque des revendications précédentes, **caractérisée par** une résistance au choc avec entaille NIS déterminée selon la norme IS0179/1 eA à +23 °C dans la plage de 3,5 à 20,0 kJ/m², de préférence dans la plage de 3,8 à 12,5 kJ/m², plus préférablement dans la plage de 4,0 à 10,0 kJ/m².

8. Composition de polypropylène hétérophasique selon l'une quelconque des revendications précédentes, **caractérisée par** un module de flexion selon la norme ISO 178 de 850 et 1 200 MPa, de préférence de 900 à 1 180 MPa.

9. Composition de polypropylène hétérophasique selon l'une quelconque des revendications précédentes, ayant un rapport entre la fraction soluble (SF) déterminée selon le procédé CRYSTEX QC, ISO 6427-B, et la fraction soluble dans l'hexane selon le procédé FDA (C6FDA), (rapport SF/C6FDA), de 3,0 à 15,0, de préférence dans la plage de 3,0 à 14,0, plus préférablement dans la plage de 6,0 à 12,0.

10. Composition de polypropylène hétérophasique selon l'une quelconque des revendications précédentes, ayant une fraction soluble dans le xylène froid (XCS) dans la plage de 8,0 à 22,0 % en poids, de préférence de 9,0 à 21,0 % en poids, plus préférablement de 10,0 à 20,0 % en poids.

11. Procédé de préparation d'une composition de polypropylène hétérophasique selon l'une quelconque des revendications précédentes, par polymérisation séquentielle en présence d'un catalyseur métallocène,
a) une première fraction de polypropylène, qui est un homopolymère de propylène ou un copolymère statistique de propylène et d'éthylène ayant une teneur en comonomère de 0,0 à 1,0 % en poids, étant préparée dans un réacteur à phase en masse dans une première étape de polymérisation
b) transfert facultatif de ladite première fraction de polypropylène vers une deuxième étape de polymérisation dans laquelle une deuxième fraction de polypropylène, qui est un homopolymère de propylène ou un copolymère statistique de propylène et d'éthylène ayant une teneur en comonomère de 0,0 à 1,0 % en poids, est préparée dans un réacteur en phase gazeuse (GPR1),
c) transfert de la première fraction de polypropylène (a) ou du mélange comprenant lesdites première et deuxième fractions de polypropylène ensemble (b) vers une deuxième (éventuellement troisième) étape de polymérisation dans laquelle l'élastomère de propylène-éthylène amorphe ayant une teneur en comonomère (C2 de XCS) de 15,0 à 30,0 % en poids, comme de 16,5 à 28,0 % en poids, ou 17,5 à 26,0 % en poids, est préparé dans un réacteur en phase gazeuse,
d) le mélange desdits deux, éventuellement trois polymères, étant éventuellement soumis à une étape de désactivation et de purification suivie d'un compoundage et d'une granulation.

12. Procédé selon la revendication 11, l'élastomère de propylène-éthylène amorphe produit en c) ayant une IV(SF) de 1,8 à 3,5 dl/g,

13. Article, de préférence article moulé par injection, comprenant la composition de polypropylène hétérophasique selon l'une quelconque des revendications précédentes.

14. Utilisation de la composition de polypropylène hétérophasique pour la fabrication d'articles, de préférence pour la fabrication d'articles moulés par injection
